Europäisches Patentamt

European Patent Office

Office européen des brevets

(11) Veröffentlichungsnummer: **0 467 426 A2**

## EUROPÄISCHE PATENTANMELDUNG

(21) Anmeldenummer: **91117701.2**

(22) Anmeldetag: **02.08.89**

(51) Int. Cl.5: **F28F 13/00**, F24J 2/28, B22F 7/00, B22F 3/26

Diese Anmeldung is am 17 - 10 - 1991 als Teilanmeldung zu der unter INID-Kode 60 erwähnten Anmeldung eingereicht worden.

(30) Priorität: **20.08.88 DE 3828348**

(43) Veröffentlichungstag der Anmeldung: **22.01.92 Patentblatt 92/04**

(60) Veröffentlichungsnummer der früheren Anmeldung nach Art. 76 EPÜ: **0 356 745**

(84) Benannte Vertragsstaaten: **AT BE CH DE ES FR GB IT LI NL SE**

(71) Anmelder: **Schwäbische Hüttenwerke Gesellschaft mit beschränkter Haftung Wilhelmstrasse 67 Postfach 3280 W-7080 Aalen-Wasseralfingen(DE)**

(72) Erfinder: **Haerle, Hans A. Röttingerstrasse 38 W-7085 Bopfingen(DE)**

(74) Vertreter: **Lorenz, Werner, Dipl.-Ing. Fasanenstrasse 7 W-7920 Heidenheim(DE)**

(54) **Vorrichtung zur Wärmeübertragung.**

(57) Bei einer Vorrichtung zur Wärmeübertragung bzw. zum Wärmeabtransport von einem Bauteil auf ein Fluid, insbesondere Luft, besteht dieses Bauteil (1) vollständig oder wenigstens teilweise aus Sinterwerkstoff. Auf das Bauteil sind Sinterteilchen, wie Späne, Metalldrähte oder grobes Metallpulver (2) aus wärmeleitfähigem Material aufgesintert oder mit diesem versintert.

EP 0 467 426 A2

Die Erfindung betrifft eine Vorrichtung zur Wärmeübertragung bzw. zum Wärmeabtransport von einem Bauteil auf ein Fluid, insbesondere Luft.

Eine Wärmeübertragung bzw. ein Wärmeabtransport aufgrund von Temperaturunterschieden wird in der Technik auf vielfältige Weise eingesetzt. Die Übertragung der Wärme kann dabei auf drei verschiedene Arten erfolgen:
Durch Wärmeleitung, wobei die Wärme durch ein festes Medium oder stagnierendes Fluid fließt, durch Konvektion, wobei die Wärme durch Bewegung des Mediums, im allgemeinen eines Fluids, transportiert wird und durch Strahlung, wobei die Wärme in Form elektromagnetischer Wellen übertragen wird. Häufig sind auch mehrere dieser elementaren Arten der Wärmeübertragung miteinander kombiniert.

So sind z.B. Wärmetauscher bekannt, die aus zwei oder mehr Rohren bestehen, die von zwei Medien unterschiedlicher Temperaturen durchfloßen werden, wobei der Wärmeaustausch nach dem Gleichstrom- oder Gegenstromprinzip erfolgt.

Bekannt sind auch Kühlrippen, Kühlstege oder dergleichen, die auf der Außenseite eines Gehäuses angeordnet sind und die durch ihre Oberflächenvergrößerung für eine bessere Wärmeabluft sorgen.

Nachteilig dabei ist jedoch, daß das Bauteil damit deutlich schwerer und größer wird.

Der vorliegenden Erfindung liegt daher die Aufgabe zugrunde eine Vorrichtung der eingangs erwähnten Art zu schaffen, die einen hohen Wirkungsgrad besitzt und gleichzeitig auch eine hohe Stabilität aufweist, wobei sie weitgehend auch frei von Beschränkungen in ihrer Form sein soll und nicht zu einer allzugroßen Gewichtserhöhung oder einem größeren Platzbedarf führt.

Erfindungsgemäß wird diese Aufgabe dadurch gelöst, daß das Bauteil vollständig oder wenigstens teilweise aus Sinterwerkstoff besteht, und daß auf das Bauteil Sinterteilchen, wie Späne, Metalldrähte oder grobes Metallpulver aus wärmeleitfähigem Material aufgesintert oder mit diesem versintert sind.

Das Bauteil kann dabei je nach Einsatzfall vollständig oder nahezu vollständig aus Metallspänen, Metalldrähten oder grobem Metallpulver formgepreßt und anschließend gesintert sein oder die Metallspäne, Metalldrähte oder das grobe Metallpulver sind auf wenigstens einen Teil der Oberfläche des Bauteiles aufgesintert.

Erfindungsgemäße Einsatzgebiete der Erfindung sind alle Gebiete, in denen es auf eine schnelle und gute Wärmeabfuhr von Bauteilen ankommt, die Wärme erzeugen bzw. in denen Wärme erzeugt wird. Dies gilt z.B. in hohem Maße für den Kraftfahrzeugbau, z.B. für Zylinderkopfdeckel, Ölwannen, Getriebedeckel und Getriebegehäuse.

Hierzu ist es bekannt, die entsprechenden Teile mit Kühlrippen zu versehen. Nachteilig dabei ist jedoch, daß diese neben einem zusätzlichen Platzbedarf auch ein größeres Gewicht des zu kühlenden Bauteiles ergeben.

Durch diese erfindungsgemäße Lösung ergibt sich nun für das zu kühlende Bauteil eine deutliche Oberflächenvergrößerung, wobei durch die Sinterung ein intensiver Kontakt mit dem Bauteil selbst für eine entsprechend gute Wärmeübertragung bzw. Wärmeableitung gegeben ist.

Im Vergleich zu bekannten Maßnahmen zur Wärmeabfuhr, wie z.B. Kühlrippen, wird durch die erfindungsgemäße Aufsinterung jedoch deutlich weniger Platz benötigt. Ebenso wird das Gewicht des Bauteiles nur unwesentlich erhöht.

Als weiterer Vorteil kommt hinzu, daß durch die erfindungsgemäße Aufsinterung zusätzlich noch eine Schalldämmung bzw. Antidröhnwirkung hinzukommt.

Selbstverständlich kann die erfindungsgemäße Maßnahme im Bedarfsfalle auch mit bekannten Maßnahmen und Einrichtungen zur Wärmeabfuhr kombiniert werden. So können z.B. Kühlrippen zusätzlich noch mit aufgesinterten Metalldrähten, Metallspänen oder gröberem Metallpulver versehen werden.

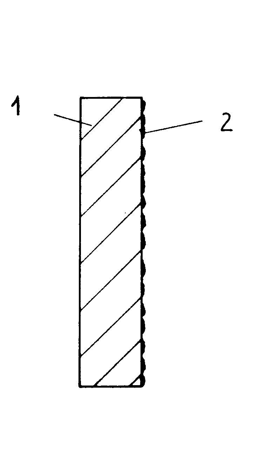

Nachfolgend ist ein Ausführungsbeispiel der Erfindung anhand der Zeichnung prinzipmäßig beschrieben.

Die Figur zeigt in Prinzipdarstellung ein Bauteil 1, dessen eine Oberfläche mit Metallspänen 2 als Sinterteilchen versehen ist, die auf das Bauteil 1 aufgesintert worden sind. Das Bauteil 1 kann aus einem beliebigen Metall bestehen, wobei lediglich darauf zu achten ist, daß es mit den aufzusinterten Metallspänen einen Sintervorgang durchführen kann. Derartige Verfahren sind ebenfalls bereits bekannt, weshalb nachfolgend hierauf nicht näher eingegangen wird.

Entsteht in dem Bauteil 1 Wärme oder soll über das Bauteil 1, das z.B. als Behälter ein in seinem Inneren befindliches Medium abschließt, Wärme abgeführt werden, so wird die Wärmeabfuhr durch die aufgesinterten Metallspäne und der dadurch erreichten Oberflächenvergrößerung deutlich besser. Das Bauteil 1 kann in diesem Falle z.B. eine Wand eines Getriebes, der Zylinderkopfdeckel eines Verbrennungsmotores oder auch jede andere Wand sein, über die eine Wärmeabfuhr erfolgen soll.

Die Durchmesser von Metalldrähten oder Metallpulver bzw. Breiten von Metallspänen und deren Längen richten sich nach dem jeweiligen Anwendungsfall und können zwischen 0,1 und 5 mm bzw. zwischen 1 und 10 mm betragen. Im allgemeinen werden die Längen deutlich größer sein als die Durchmesser bzw. Breiten. Im Bedarfsfalle können jedoch selbstverständlich hier auch noch Abweichungen sowohl nach unten als auch nach oben vorgenommen werden.

**Patentansprüche**

1. Vorrichtung zur Wärmeübertragung bzw. zum Wärmeabtransport von einem Bauteil auf ein Fluid, insbesondere Luft,
**dadurch gekennzeichnet, daß**
das Bauteil (1) vollständig oder wenigstens teilweise aus Sinterwerkstoff besteht, und daß auf das Bauteil (1) Sinterteilchen, wie Späne, Metalldrähte oder grobes Metallpulver (2) aus wärmeleitfähigem Material aufgesintert oder mit diesem versintert sind.

2. Vorrichtung nach Anspruch 1,
**dadurch gekennzeichnet, daß**
das Bauteil (1) aus Metallspänen, Metalldrähten oder grobem Metallpulver formgepreßt und anschließend gesintert ist.

3. Vorrichtung nach Anspruch 1,
**dadurch gekennzeichnet, daß**
die Dicke bzw. der Durchmesser der Sinterteilchen (2) zwischen 0,1 und 5 mm beträgt.

4. Vorrichtung nach Anspruch 3,
**dadurch gekennzeichnet, daß**
die Dicke bzw. der Durchmesser der Sinterteilchen (2) zwischen 0,1 bis 2 mm beträgt.

5. Vorrichtung nach Anspruch 1,
**dadurch gekennzeichnet, daß**
die Längen der Sinterteilchen (2) zwischen 1 und 10 mm liegen.

6. Vorrichtung nach Anspruch 5,
**dadurch gekennzeichnet**, daß
die Längen der Sinterteilchen (2) zwischen 2 und 5 mm liegen.

7. Vorrichtung nach einem der Ansprüche 1 - 6,
**dadurch gekennzeichnet,** daß
als Sinterteilchen (2) Kupfer vorgesehen ist.

8. Vorrichtung nach einem der Ansprüche 1 - 7,
**dadurch gekennzeichnet,** daß
das Bauteil (1) in bekannter Weise mit Kühlrippen versehen ist, auf die die Sinterteilchen (2) aufgesintert oder mit denen sie versintert sind.